# EUROPÄISCHE PATENTSCHRIFT

(11) **EP 0 662 886 B1**
(45) Veröffentlichungstag und Bekanntmachung des Hinweises auf die Patenterteilung: **18.06.1997**
(21) Anmeldenummer: 93920778.3
(22) Anmeldetag: 20.09.1993
(51) Int. Cl.: B60S 1/20, B60S 1/16

(54) **VORRICHTUNG ZUM REINIGEN VON WINDSCHUTZSCHEIBEN**
DEVICE FOR CLEANING WINDSCREENS
DISPOSITIF POUR NETTOYER DES PARE-BRISE

(30) Priorität: 10.10.1992 DE 4234202
(43) Veröffentlichungstag der Anmeldung: 19.07.1995
(73) Patentinhaber: ITT Automotive Europe GmbH, 60488 Frankfurt am Main (DE)
(72) Erfinder: MAYER, Günter, D-71732 Tamm (DE); SCHOLL, Wolfgang, D-74376 Gemmrigheim (DE)
(86) Internationale Anmeldenummer: EP9302545
(87) Internationale Veröffentlichungsnummer: WO9408827

(56) Entgegenhaltungen:
- DE-A- 2 919 240
- DE-A- 4 006 733
- DE-C- 567 742
- DE-U- 9 206 963
- FR-A- 1 015 830
- FR-A- 1 179 118
- FR-A- 2 658 460

## Beschreibung

Die Erfindung betrifft eine Vorrichtung zum Reinigen von Windschutzscheiben, Fenstern oder optischen Einrichtungen nach dem Oberbegriff des Patentanspruches 1. Eine derartige Vorrichtung ist z.B. in der FR-A-1 015 830 dargestellt.

Vorrichtungen der eingangs genannten Art sind bekannt und bestehen aus einem System von Stangen und Getrieben, durch welche lineare Hin- und Herbewegungen des Schlittens gewährleistet sind. Als erheblicher Nachteil wird hier die Tatsache empfunden, daß beim aufwendigen Aufbau solcher Linearwischanlagen der Schlitten einen ungünstigen Bewegungsablauf aufweist, da seine Geschwindigkeit im wesentlichen konstant ist und im Bereich seiner Bewegungsrichtungumlenkstellen schlagartig verändert wird. Diese in den Endbereichen auftretenden ruckartigen Bewegungen des Schlittens führen zur erheblichen Beanspruchung des gesamten Antriebsmechanismus und somit zur robusteren Bauweise der Vorrichtung. Die schlagartigen Geschwindigkeitsänderungen des Schlittens haben schließlich auch zur Folge, daß sich diese Bewegungen auch auf die zu reinigende Vorrichtung in Form von Schwingungen überträgt, was unerwünscht ist.

Ausgehend von dem obigem Stand der Technik liegt der Erfindung die Aufgabe zugrunde, hier Abhilfe zu schaffen und die gattungsgemäße Vorrichtung so weiter zu bilden, daß insbesondere der Bewegungsablauf des Schlittens so verbessert wird, daß seine Geschwindigkeit im Bereich der Umlenkstellen minimiert wird.

Die gestellte Aufgabe wird erfindungsgemäß durch die Merkmale des Anspruches 1 gelöst.

Die Erfindung macht sich die Tatsache zunutze, daß der Bewegungsablauf eines abtriebsseitigen Bewegungen ausübenden Teils des Übersetzungsgetriebes einer Sinus-Funktion sehr nahe kommt, so daß die Geschwindigkeit des Schlittens im Bereich der Umlenkstellen annähernd Null ist. Dies führt zur minimalen Belastung aller Komponenten der Vorrichtung und insbesondere zum ruhigen Bewegungsablauf des Schlittens.

Weitere zweckmäßige und vorteilhafte Ausgestaltungen der Erfindung gehen aus den Unteransprüchen hervor.

Eine besonders zweckmäßige Maßnahme der Erfindung sieht vor, daß das abtriebsseitige Bewegungen ausübende Teil ein Abschnitt eines auf der Welle gelagerten und als Gehäuse ausgebildeten Hohlzylinders ist. Hierbei ist zweckmäßig, wenn das Gehäuse eine im Innenraum des Übersetzungsgetriebes angeordnete und koaxial mit der Achse der Welle verlaufende Nabe mit Außenzahnrad aufweist. Durch diese Maßnahmen wird ein Übersetzungsgetriebe vorgeschlagen, dessen Gehäuse, also das abtriebsseitige Bewegungen ausübende Teil, zwei Funktionen gleichzeitig erfüllt. Zum einen werden die für die Übersetzung erforderlichen Teile geschützt, so daß die äußeren mechanischen Einflüsse auf das Übersetzungsgetriebe praktisch ausgeschlossen werden können, und zum anderen erfüllt das Gehäuse die Funktion eines Organs, das mit dem Zug- und/oder Druckorgan in direkter Wirkverbindung steht.

Eine weitere zweckmäßige Ausgestaltung der Erfindung sieht vor, daß im Gehäuse mindestens ein um eine feste Achse verdrehbares und mit dem Außenzahnrad der Nabe sowie einem mit der Welle drehfest verbundenen Zahnrad kämmendes Zahnrad angeordnet ist. Im Rahmen dieses Erfindungsgedankens ist es besonders zweckmäßig, wenn drei mit dem Außenzahnrad der Nabe und dem Zahnrad der Welle kämmende Zahnräder vorgesehen sind. Dabei können diese Maßnahmen auch so getroffen sein, daß die Zahnräder von Zylinderstiften getragen sind. Die Zylinderstifte sowie die Welle sind vom Montagerahmen getragen.

Eine weitere zweckmäßige und besonders vorteilhafte Ausgestaltung der Erfindung sieht vor, daß die radiale Außenseite des Gehäuses gewindeartige Nuten aufweist, die mit dem als Seil oder Riemen ausgebildeten Zugorgan in Wirkverbindung stehen. Hierdurch wird eine Reibverbindung zwischen dem Gehäuse und dem Seil bzw. Riemen hergestellt.

Bezüglich einer einfachen und kostengünstigen Herstellung der Vorrichtung ist es zweckmäßig, wenn der Montagerahmen die Antriebseinrichtung, das Getriebe sowie das Übersetzungsgetriebe trägt und eine in Bewegungsrichtung des Schlittens sich erstreckende Führungsstange für den Schlitten aufweist. Der Montagerahmen kann hierbei als Stanz- oder Gußteil hergestellt werden, der die einzelnen Komponenten der Vorrichtung trägt und problemlos eingebaut werden kann. Die axialen Enden der Führungsstange können Umlenkrollen für das Zugorgan tragen.

Um einen ordnungsgemäßen Bewegungsablauf des Schlittens zu gewährleisten, sieht eine weitere zweckmäßige Ausgestaltung der Erfindung vor, daß die Führungsstange Laufflächen für Laufrollen des Schlittens aufweist. Um eine Unverdrehbarkeit des Schlittens um die Stange sicherzustellen, sieht eine weitere zweckmäßige Ausgestaltung der Erfindung vor, daß die Laufflächen im Querschnitt konkav und auf den einander abgekehrten Seiten der Führungsstange ausgebildet sind.

Dadurch, daß die Führungsstange gebogen und auf die Außenkontur der Windschutzscheibe angepaßt ist, wird gewährleistet, daß der Wischerarm den Konturen der Windschutzscheibe problemlos folgen kann.

Die Herstellung auf der Führungsstange kann ferner dadurch vereinfacht werden, daß die Führungsstange aus einem Hohlprofilabschnitt gebildet ist, dessen Enden abgeschlossen sind. Hierbei ist vorteilhaft, wenn der Schlitten mindestens zwei, vorzugsweise drei Laufrollen aufweist, von denen mindestens eine Laufrolle auf der einen Lauffläche abrollt, während die anderen Laufrollen auf der anderen Lauffläche abrollen.

Da es für den ordnungsgemäßen Betrieb der Vorrichtung von entscheidender Bedeutung ist, daß das Zug- und/oder Druckorgan mit dem Übersetzungsgetriebe immer in Wirkverbindung steht, sieht eine zweckmäßige Maßnahme der Erfindung vor, daß der Schlitten eine mit dem Zugorgan verbundene Spannvorrichtung aufweist, durch die die Spannkraft des Zugorgans eingestellt werden kann.

Ein Ausführungsbeispiel der Erfindung ist in der Zeichnung schematisch dargestellt und wird im folgenden näher erläutert. Es zeigen
- Fig. 1: eine Vorrichtung in Seitenansicht,
- Fig. 2: die in Fig. 1 dargestellte Vorrichtung in Richtung des Pfeiles II,
- Fig. 3: den mit III bezeichneten Teil nach Fig. 1 vergrößert dargestellt,
- Fig. 4: einen Schnitt entlang der Linie IV-IV nach Fig. 1 und vergrößert dargestellt,
- Fig. 5: den mit V bezeichneten Teil nach Fig. 2 vergrößert dargestellt,
- Fig. 6: den in Fig. 1 dargestellten Schlitten von seiner anderen Seite,
- Fig. 7: den mit VII bezeichneten Teil nach Fig. 1 vergrößert dargestellt,
- Fig. 8: den mit VIII bezeichneten Teil nach Fig. 2 vergrößert dargestellt und
- Fig. 9: einen Schnitt entlang der Linie IX-IX nach Fig. 7.

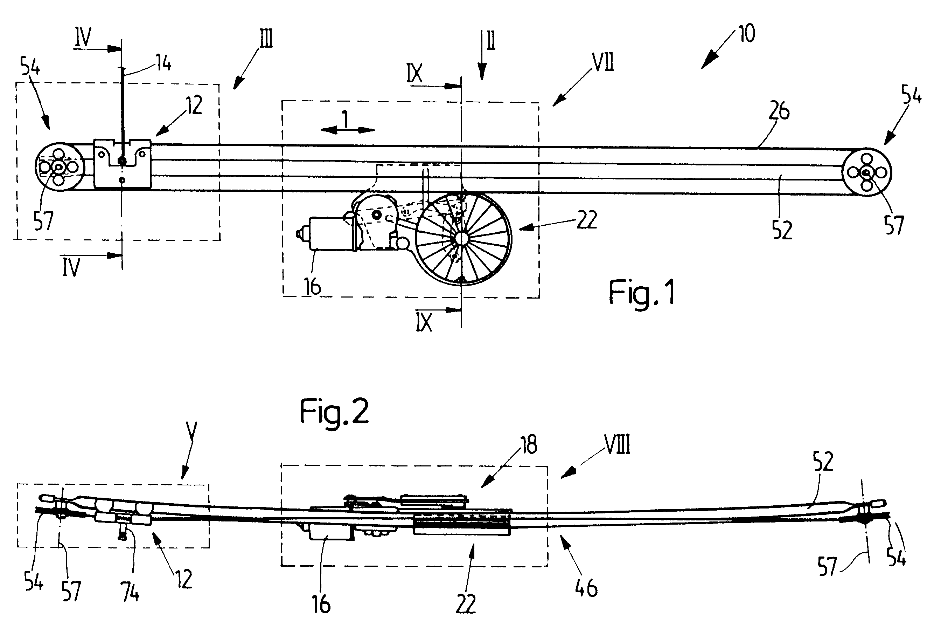

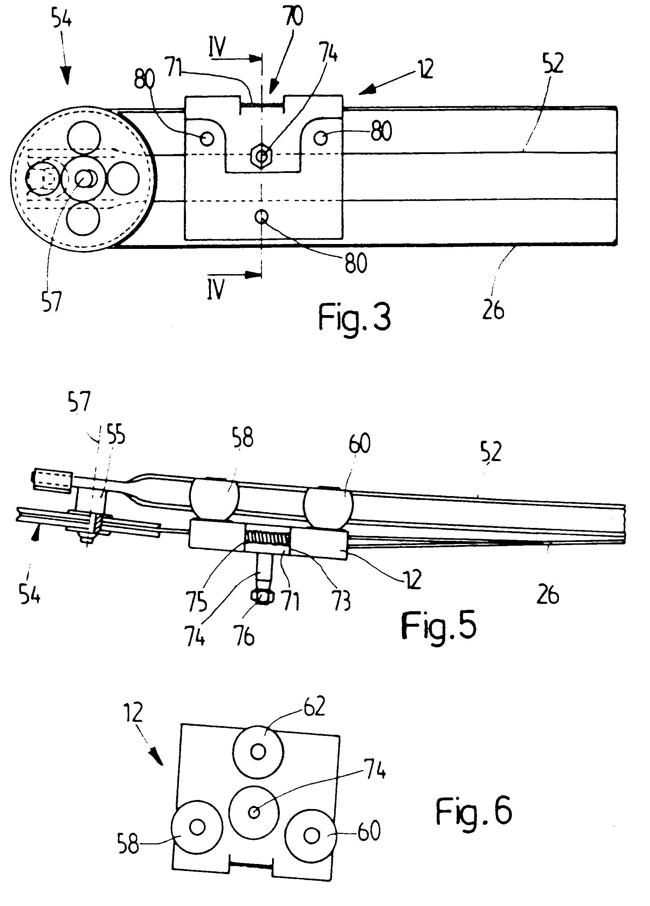

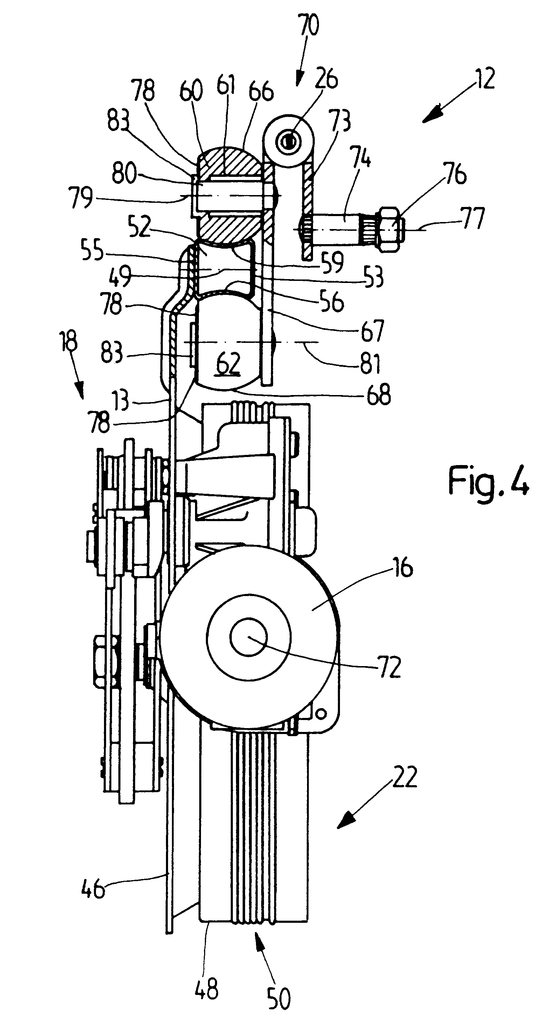

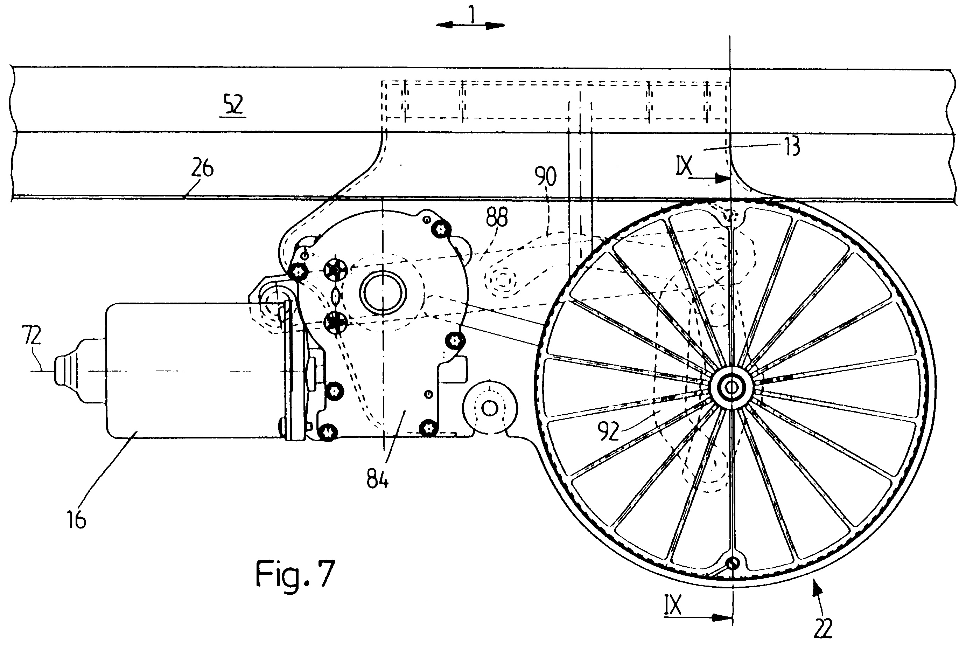

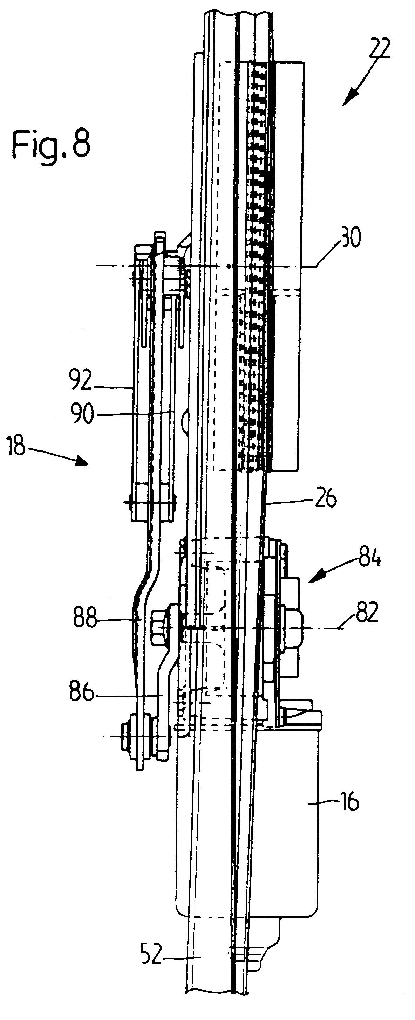

In den Fig. 1 und 2 sind im Zusammenhang mit den Fig. 3 - 9 eine Vorrichtung 10 bzw. Teile dieser Vorrichtung zum Reinigen von Windschutzscheiben, Fenstern oder optischen Einrichtungen dargestellt. Diese als Linearwischeranlage funktionierende Vorrichtung 10 weist einen von einem Hin- und Herbewegungen ausübenden Schlitten 12 getragenen Wischerarm 14 sowie ein mit einer Antriebsvorrichtung 16 zusammenarbeitendes und den Schlitten 12 antreibendes Getriebe 18 zum Umwandeln von Drehbewegungen in schwingende Bewegungen auf, das abtriebsseitig mit einer schwingende Bewegungen ausübenden Welle 20 verbunden ist. Die Welle 20 ist das antreibende Teil eines Übersetzungsgetriebes 22 für schwingende Bewegungen. Das abtriebsseitige Bewegungen ausübende Teil 24 des Getriebes 22 treibt den Schlitten 12 über ein Zug- und/oder Druckorgan 26 an.

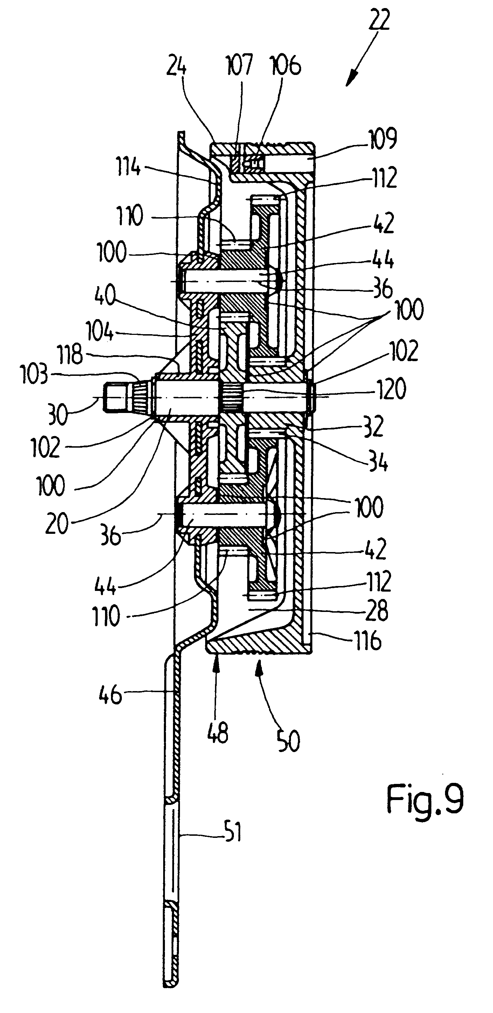

Man erkennt (vgl. insbesonders Fig. 9), daß das abtriebsseitige Bewegungen ausübende Teil 24 ein Abschnitt eines auf der Welle 20 gelagerten und als Gehäuse ausgebildeten Hohlzylinders ist. Das Gehäuse 24 weist eine im Innenraum 28 des Übersetzungsgetriebes 22 angeordnete und koaxial mit der Achse 30 der Welle 20 verlaufende Nabe 32 mit Außenzahnrad 34 auf und ist mit einer außenseitigen Vertiefung 116 versehen. Im Gehäuse 24 sind ferner drei um jeweils eine feste Achse 36 verdrehbare und mit dem Außenzahnrad 34 der Nabe 32 sowie einem mit der Welle 20 über Riffelung 120 drehfest verbundenen Zahnrad 40 kämmende Zahnräder 42 angeordnet. Die Zahnräder 42 sind von ortsfesten Zylinderstiften 44 getragen und bestehen aus jeweils einem großen Ritzel 112 und einem kleinen Ritzel 110, durch die das Übersetzungsverhältnis des Übersetzungsgetriebes definiert ist. Das Verstellungsvermögen des Übersetzungsgetriebes 22 mit Bezug auf den Schlitten 12 ist selbstverständlich auch vom Außendurchmesser des im Querschnitt kreisrunden Gehäuses 24 abhängig. Ferner laßen die Fig. 1 und 9 erkennen, daß ein Montagerahmen 46 vorgesehen ist, der die Zylinderstifte 44, die Welle 20, die Antriebseinrichtung 16, das Getriebe 18 sowie das Übersetzungsgetriebe 22 trägt und eine in Bewegungsrichtung (Doppelpfeil 1) des Schlittens 12 sich erstreckende Führungsstange 52 für den Schlitten 12 sowie eine Aufnahme 51 für das Untersetzungsgetriebe aufweist. Die axialen Enden der Führungsstange 52 weisen jeweils eine Umlenkrolle 54 für das als Seil ausgebildete Zugorgan 26 auf.

Die Fig. 4 und 9 lassen erkennen, daß die radiale Außenseite 48 des Gehäuses 24 gewindeartige Nuten 50 aufweist, die mit dem Seil 20 in Wirkverbindung stehen.

Die Fig. 1, 4 und 5 lassen erkennen, daß die Führungsstange 52 Laufflächen 59 und 56 für Laufrollen 58, 60 und 62 des Schlittens 12 aufweist. Die Laufflächen 59 und 56 sind im Querschnitt konkav und auf den einander abgekehrten Seiten der Führungsstange 52 ausgebildet.

Wie insbesondere Fig. 2 und 5 erkennen lassen, ist die Führungsstange 52 gebogen und auf die Außenkontur einer nicht näher dargestellten Windschutzscheibe angepaßt. Dabei besteht die Führungsstange 52 aus einem Hohlprofilabschnitt, dessen Enden abgeschlossen sind.

Die Fig. 3 - 6 lassen erkennen, daß der Schlitten 12 drei Laufrollen 58, 60, 62 aufweist, von denen die Laufrolle 62 auf der Lauffläche 56 abrollt, während die Laufrollen 58 und 60 auf der Lauffläche 59 abrollen. Die Abrollflächen 66 und 68 der Laufrollen 60 und 62 sind im Querschnitt konvex und komplementär zu den Laufflächen 59 und 56 ausgebildet. Die Laufrollen 60, 62 weisen Laufbuchsen 61 aus Lagerwerkstoff auf, die von den Stiften 80 mit Köpfen 83 getragen sind. Die Achsen 79, 81 der Stifte verlaufen senkrecht zum längeren Schenkel 67 des Schlittens 12. Der parallel zum längeren Schenkel 67 verlaufende kürzere Schenkel 73 trägt den Bolzen 74 mit Mutter 76 für den Wischerarm. Seine Achse 77 verläuft etwa parallel mit den Achsen 79, 81. Die Längsmittelachse 49 der Führungsstange 52 ist bogenförmig ausgebildet, was auch für die Wände 53, 55 der Führungsstange gilt.

Im einzelnen zeigen die Figuren, daß der Montagerahmen 46 ein gestanztes oder gegossenes Teil mit einer Führungsstange 52 ist, die sich in Bewegungsrichtung 1 des Schlittens 12 erstreckt. Im mittleren Bereich des Montagerahmens 46 und unterhalb der Führungsstange 52 sind die als Elektromotor ausgebildete Antriebseinrichtung 16 mit einem Untersetzungsgetriebe 84 sowie das Getriebe 18 und das Übersetzungsgetriebe 22 angeordnet. Diese Teile der Vorrichtung sind von einer Schürze 13, die sich nach unten hin erstreckt, getragen. Die letztgenannten Teile der Vorrichtung sind mit der Schürze durch Schrauben, Nieten oder dergleichen verbunden. Der nicht näher dargestellte Rotor des Motors 16 dreht sich um eine Achse 72, die etwa parallel zur Bewegungsrichtung 1 des Schlittens, jedoch senkrecht zur Achse 30 der Welle 20 verläuft. Da die Drehzahl des Motors 16 regelmäßig zu groß ist, ist das Untersetzungsgetriebe 84 zwischen dem

Motor 16 und das Getriebe 18 geschaltet. Das Getriebe 18 ist von einer Kurbelstange 86 des Untersetzungsgetriebes 84, die sich um die Achse 82 dreht, angetrieben. Das Getriebe 18 besteht aus den Stangen 88, 90 und 92, durch die die Drehbewegungen der Kurbelstange 86 in schwenkbare Bewegungen der Welle 20 umgewandelt werden.

Die Zwischenschaltung des Übersetzungsgetriebes 22 zwischen das Getriebe 18 und das Seil 26 hat zur Folge, daß die Schwenkbewegungen der Welle 20 in schwingende Bewegungen des Gehäuses 24 umgewandelt werden. Je nachdem, wie die Zahnräder 40 und 42 ausgebildet sind und welches Übersetzungsverhältnis zwischen diesen Zahnrädern und dem Zahnrad 40 sowie dem Außenzahnrad 34 herrscht, führt das Gehäuse 24 mehrfach Drehbewegungen in einer bzw. anderer Richtung aus. Selbstverständlich ist es möglich, die Zahnräder 40, 42 und 34 so zu verändern, daß das Übersetzungsverhältnis verändert wird. Die Zahnräder 40, 42 sowie das Gehäuse 24 können aus gespritzten Kunststoffteilen oder Metall bestehen. Der Montagerahmen 46 weist im Bereich des Übersetzungsgetriebes 22 eine Ausnehmung auf, in welche das Tragstück 104 mit Halterohr 118 des Übersetzungsgetriebes 22 einbringbar ist und diese Ausnehmungen formschlüssig ausfüllt. Die Zylinderstifte 44 sind mit dem Tragstück 104 fest, während die Welle 20 mit dem Tragstück 104 verdrehbar verbunden ist. Um axiale Verstellungen der Welle 20 zu vermeiden, sind mit der Welle 20 Scheiben 100 und Sicherungsringe 102 lösbar verbunden. Eine drehfeste Verbindung zwischen der Welle 20 und dem Getriebe 18 ist dadurch gewährleistet, daß ihr zum Getriebe 18 gerichtetes Ende eine Riffelung 103 besitzt. Die Steifigkeit des Tragstückes 104 im Bereich des Übersetzungsgetriebes 22 ist dadurch gewährleistet, daß der Montagerahmen 46 in diesem Bereich uneben ausgebildet ist, was durch die in den Innenraum 28 hineinragende Ringvertiefung 114 dokumentiert ist.

Wird der Motor 16 eingeschaltet, werden die Drehbewegungen seines Rotors über das Untersetzungsgetriebe 84 auf das Getriebe 18 übertragen, das auf die Welle 20 Schwenkbewegungen ausübt.

Diese Schwenkbewegungen der Welle 20 werden über die Zahnräder 40, 44 und 34 auf das Gehäuse 24 übertragen, das dabei mehrere Umdrehungen im Uhrzeigersinn und sodann die gleiche Anzahl der Drehungen gegen den Uhrzeigersinn ausübt. Da das Seil 26 mit dem Gehäuse 24 unverrutschbar verbunden und mittels einer in einer Bohrung 109 mit Gewinde und Druckkörper 107 angeordneten Spannschraube 106 festgehalten ist, wird es in Richtung des Doppelpfeiles 1 (vgl. Fig. 1) hin- und herbewegt und somit auch der Schlitten 12 mit dem Wischerarm 14 mitgenommen. Die Geschwindigkeit des Schlittens 12 ist im Verstellbereich nicht konstant. Die maximale Geschwindigkeit erreicht der Schlitten etwa im mittleren Bereich zwischen den beiden Umlenkrollen 54, während sie in den Endbereichen (vgl. Fig. 1 und 2) allmählich abnimmt, bis sie den Wert Null erreicht hat. Danach bewegt sich der Schlitten 12 in entgegengesetzter Richtung und nimmt an Geschwindigkeit zu. Nach Erreichung der maximalen Geschwindigkeit, d. h. wenn der Schlitten 12 etwa im Bereich des Übersetzungsgetriebes 22 angeordnet ist, nimmt seine Geschwindigkeit wieder ab, und zwar bis zum Wendepunkt, wo die Geschwindigkeit gleich 0 ist. Diese Hin- und Herbewegungen wiederholen sich solange, solange der Elektromotor 16 eingeschaltet ist.

Der Wischerarm 14 ist etwa senkrecht zur Führungsstange 52 angeordnet und vom Bolzen 74 getragen. Durch die Anordnung der Laufrollen 58, 60 und 62, die mit ihren Bolzen 80 über Sicherungsscheiben 78 verbunden sind, ist ein ordnungsgemäßer Bewegungsablauf des Schlittens 12 gewährleistet. Da das Seil 26 während der Bewegung des Schlittens 12 erheblichen Kräften ausgesetzt ist, muß es im Bedarfsfall gespannt werden, wozu die Spannvorrichtung 70 mit einer Schraube 71 vorgesehen ist, die sich an Scheiben 73, 75 abstützt.

Schließlich läßt die Fig. 5 erkennen, daß die Umlenkrollen 54 mit der Führungsstange 52 über eine Buchse 55 verbunden und seitlich von der Führungsstange 52 angeordnet sind. Die Achsen 57 der Umlenkrollen 54 laufen daher nicht parallel zueinander.

## Patentansprüche

1. Vorrichtung zum Reinigen von Windschutzscheiben, Fenstern oder optischen Einrichtungen mit einem von einem Hin- und Herbewegungen ausführenden Schlitten (12) getragenen Wischerarm (14) und mit einem von einer Antriebseinrichtung (16) mittelbar angetriebenen Übersetzungsgetriebe (22), dessen abtriebsseitige Bewegungen ausübendes Teil (24) den Schlitten (12) über ein Zug-Druck-Organ (26) antreibt und dessen Welle (20) das antreibende Teil des Übersetzungsgetriebes (22) ist, dadurch **gekennzeichnet,** daß die Antriebseinrichtung (16) eine nur in einer Drehrichtung antreibbare Antriebswelle aufweist, daß die Antriebswelle der Antriebseinrichtung (16) mit einem zusätzlichen Getriebe (18) zum Umwandeln von Drehbewegungen in schwingende Bewegungen verbunden ist und daß das Getriebe (18) zur Übertragung der schwingenden Bewegungen auf das Übersetzungsgetriebe (22) mit der das Übersetzungsgetriebe (22) antreibenden Welle (20) verbunden ist.

2. Vorrichtung nach Anspruch 1, dadurch **gekennzeichnet,** daß das zusätzliche Getriebe (18) ein Kurbelgetriebe ist.

3. Vorrichtung nach Anspruch 3, dadurch **gekennzeichnet,** daß das Getriebe (18) derart von den Stangen (88,90,92) gebildet ist, daß die Drehbewegungen der Kurbelstange (86) in schwenkbare Bewegungen der Welle (20) umwandelbar sind.

4. Vorrichtung nach einem der vorhergehenden Ansprüche, dadurch **gekennzeichnet,** daß das abtriebsseitige Bewegungen ausübende Teil (24) ein Abschnitt eines auf der Welle (20) gelagerten und als Gehäuse ausgebildeten Hohlzylinders ist.

5. Vorrichtung nach einem der vorhergehenden Ansprüche, dadurch **gekennzeichnet,** daß das Gehäuse (24) eine im Innenraum (28) des Übersetzungsgetriebes (22) angeordnete und koaxial mit der Achse (30) der Welle (20) verlaufende Nabe (32) mit Außenzahnrad (34) aufweist.

6. Vorrichtung nach einem der vorhergehenden Ansprüche, dadurch **gekennzeichnet,** daß im Gehäuse (24) mindestens ein um eine feste Achse (36) verdrehbares und mit der Welle (20) drehfest verbundenen Zahnrad (40) kämmendes Zahnrad (42) angeordnet ist.

7. Vorrichtung nach einem der vorhergehenden Ansprüche, dadurch **gekennzeichnet,** daß drei mit dem Außenzahnrad (34), der Nabe (32) und dem Zahnrad (40) der Welle (20) kämmende Zahnräder (42) vorgesehen sind.

8. Vorrichtung nach einem der vorhergehenden Ansprüche, dadurch **gekennzeichnet,** daß die Zahnräder (42) von Zylinderstiften (44) getragen sind.

9. Vorrichtung nach einem der vorhergehenden Ansprüche mit einem Montagerahmen (46), dadurch **gekennzeichnet,** daß die Zylinderstifte (44) sowie die Welle (20) vom Montagerahmen (46) getragen sind.

10. Vorrichtung nach einem der vorhergehenden Ansprüche, dadurch **gekennzeichnet,** daß die radiale Außenseite (48) des Gehäuses (24) gewindeartige Nuten (50) aufweist, die mit dem als Seil oder Riemen ausgebildeten Zugorgan (26) in Wirkverbindung stehen.

11. Vorrichtung nach einem der vorhergehenden Ansprüche, dadurch **gekennzeichnet,** daß der Montagerahmen (46) die Antriebseinrichtung (16), das Getriebe (18) sowie das Übersetzungsgetriebe (22) trägt und eine in Bewegungsrichtung des Schlittens (12) sich erstreckende Führungsstange (52) für den Schlitten (12) aufweist.

12. Vorrichtung nach einem der vorhergehenden Ansprüche, dadurch **gekennzeichnet,** daß die axialen Enden der Führungsstange (52) Umlenkrollen (54) für das Zugorgan (26) tragen.

13. Vorrichtung nach einem der vorhergehenden Ansprüche, dadurch **gekennzeichnet,** daß die Führungsstange (52) Laufflächen (56, 59) für Laufrollen (58, 60, 62) des Schlittens (12) aufweist.

14. Vorrichtung nach einem der vorhergehenden Ansprüche, dadurch **gekennzeichnet,** daß die Laufflächen (56, 59) im Querschnitt konkav und auf den einander abgekehrten Seiten der Führungsstange (52) ausgebildet sind.

15. Vorrichtung nach einem der vorhergehenden Ansprüche, dadurch **gekennzeichnet,** daß die Führungsstange (52) gebogen und auf die Außenkontur der Windschutzscheibe angepaßt ist.

16. Vorrichtung nach einem der vorhergehenden Ansprüche, dadurch **gekennzeichnet,** daß die Führungsstange (52) aus einem Hohlprofilabschnitt gebildet ist, dessen Enden abgeschlossen sind.

17. Vorrichtung nach einem der vorhergehenden Ansprüche, dadurch **gekennzeichnet,** daß der Schlitten (12) mindestens zwei, vorzugsweise drei Laufrollen (58, 60, 62) aufweist, von denen mindestens eine Laufrolle (60) auf der einen Lauffläche (59) abrollt, während die anderen Laufrollen (62) auf der anderen Lauffläche (56) abrollen.

18. Vorrichtung nach einem der vorhergehenden Ansprüche, dadurch **gekennzeichnet,** daß die Abrollflächen (66, 68) der Laufrollen (60, 62) im Querschnitt konvex und komplementär zu den Laufflächen (56, 59) ausgebildet sind.

19. Vorrichtung nach einem der vorhergehenden Ansprüche, dadurch **gekennzeichnet,** daß der Schlitten (12) eine mit dem Zugorgan (26) verbundene Spannvorrichtung (70) aufweist.

## Claims

1. An arrangement for cleaning windscreens, window-panes or optical instruments, comprising a wiper arm (14) supported by a carriage (12) performing reciprocating movements, and a transmission gear (22) indirectly driven by a driving means (16), wherein the part (24) of the transmission gear (22) performing movements on the driven side actuates the carriage (12) through a tensile and/or thrust member (26), and shaft (20 thereof is the driving part of the transmission gear (22),
characterized in that the driving means (16) includes an output shaft drivable in only one direction of rotation, in that the output shaft of the driving means (16) is connected to an additional gear (18) for transforming rotary movements into oscillating movements, and in that the gear (18) for transmitting the oscillating movements to the transmission gear (22) is connected to the shaft (20) driving the transmission gear (22).

2. An arrangement as claimed in claim 1,
characterized in that the additional gear (18) is a crank gear.

3. An arrangement as claimed in claim 3,
characterized in that the gear (18) is comprised of rods (88, 90, 92) in such a fashion that the rotary movements of the crank rod (86) can be transformed into swivelable movements of the shaft (20).

4. An arrangement as claimed in any one of the preceding claims,
characterized in that the part (24) performing movements on the driven side is a section of a hollow cylinder arranged on the shaft (20) and configured as a housing.

5. An arrangement as claimed in any one of the preceding claims,
characterized in that the housing (24) comprises a hub (32) with an outer gear (34) arranged in the interior (28) of the transmission gear (22) and extending in coaxial relationship with the axis (30).

6. An arrangement as claimed in any one of the preceding claims,
characterized in that at least one toothed gear (42) rotatable about a stationary axis (36) and in engagement with a toothed gear (40) connected in non-rotating manner to the shaft (20) is arranged within the housing (24).

7. An arrangement as claimed in any one of the preceding claims,
characterized in that three toothed gears (42) are provided which are in engagement with the outer gear (34), the hub (32) and the toothed gear (40) of the shaft (20).

8. An arrangement as claimed in any one of the preceding claims,
characterized in that the toothed gears (42) are carried by cylindrical pins (44).

9. An arrangement as claimed in any one of the preceding claims, comprising a mounting frame (46),
characterized in that the cylindrical pins (44) and the shaft (20) are carried by the mounting frame (46).

10. An arrangement as claimed in any one of the preceding claims,
characterized in that the radial outer side (48) of the housing (24) comprises thread-type grooves (50) cooperating with the tensile member (26) formed as a cable or belt.

11. An arrangement as claimed in any one of the preceding claims,
characterized in that the mounting frame (46) carries the driving means (16), the gear (18) and the transmission gear (22) and comprises a guiding rod (52) for the carriage (12) extending in the direction of movement of the carriage (12).

12. An arrangement as claimed in any one of the preceding claims,
characterized in that the axial ends of the guiding rod (52) carry pulleys (54) for the tensile member (26).

13. An arrangement as claimed in any one of the preceding claims,
characterized in that the guiding rod (52) includes bearing faces (56, 59) for the idlers (58, 60, 62) of the carriage (12).

14. An arrangement as claimed in any one of the preceding claims,
characterized in that the bearing faces (56, 59), in cross-section, are of a concave configuration and are formed on the sides of the guiding rod (52) facing away from one another.

15. An arrangement as claimed in any one of the preceding claims,
characterized in that the guiding rod (52) is bent to conform to the outer contour of the windscreen.

16. An arrangement as claimed in any one of the preceding claims,
characterized in that the guiding rod (52) is formed from a hollow profile section, the ends of which are sealed.

17. An arrangement as claimed in any one of the preceding claims,
characterized in that the carriage (12) comprises at least two, preferably three, idlers (58, 60, 62), at least one idler (60) rolling along the first bearing surface (59), while the other idlers (62) roll along the second bearing surface (56).

18. An arrangement as claimed in any one of the preceding claims,
characterized in that the rolling surfaces (66, 68) of the idlers (60, 62), in cross-section, are of a convex configuration and are complementary to the bearing faces (56,59).

19. An arrangement as claimed in any one of the preceding claims,
characterized in that the carriage (12) comprises a clamping means (70) connected to the tensile member (26).

## Revendications

1. Dispositif pour le nettoyage de pare-brise, de vitres ou de dispositifs optiques, comportant un balai d'essuie-glace (14) porté par un chariot (12) effectuant des mouvements de va-et-vient, et une boîte de vitesses (22) entraînée indirectement par un dispositif d'entraînement (16), dont la partie (24) effectuant des mouvements du côté de l'entraînement de sortie entraîne le chariot (12) par l'intermédiaire d'un organe de traction-poussée (26), et dont l'arbre (20) est l'élément menant de la boîte de vitesses (22),
caractérisé en ce que le dispositif d'entraînement (16) comporte un arbre de sortie pouvant être entraîné dans un seul sens de rotation, en ce que l'arbre de sortie du dispositif d'entraînement (16) est relié à un mécanisme de transmission supplémentaire (18) destiné à transformer les mouvements de rotation en mouvements oscillants, et en ce que le mécanisme de transmission (18) est relié à l'arbre (20) entraînant la boîte de vitesses (22) afin de transmettre les mouvements oscillatoires à la boîte de vitesses (20).

2. Dispositif selon la revendication 1, caractérisé en ce que le mécanisme de transmission supplémentaire (18) est un mécanisme à manivelle.

3. Dispositif selon la revendication 2, caractérisé en ce que le mécanisme de transmission (18) est constitué de biellettes (88, 90, 92) de telle sorte que les mouvements de rotation de la manivelle (86) peuvent être transformés en mouvements d'oscillation de l'arbre (20).

4. Dispositif selon l'une des revendications précédentes, caractérisé en ce que l'élément (24) effectuant des mouvements du côté d'entraînement de sortie est un secteur d'un cylindre creux monté sur l'arbre (20) et configuré en forme d'un carter.

5. Dispositif selon l'une des revendications précédentes, caractérisé en ce que le carter (24) comporte un moyeu (32) pourvu d'une couronne dentée extérieure (34), disposé dans l'espace intérieur de la boîte de vitesses (22) et s'étendant coaxialement à l'axe (30) de l'arbre (20).

6. Dispositif selon l'une des revendications précédentes, caractérisé en ce qu'au moins une roue dentée (42) pouvant tourner sur un axe fixe (36) et en prise avec une roue dentée (40) reliée de façon solidaire en rotation à l'arbre (20), est prévue à l'intérieur du carter (24).

7. Dispositif selon l'une des revendications précédentes, caractérisé en ce que trois roues dentées (42) en prise avec la couronne dentée extérieure (34), le moyeu (32) et la roue dentée (40) de l'arbre (20) sont prévues.

8. Dispositif selon l'une des revendications précédentes, caractérisé en ce que les roues dentées (42) sont supportées par des goupilles cylindriques (44).

9. Dispositif selon l'une des revendications précédentes, comportant un cadre de montage (46), caractérisé en ce que les goupilles cylindriques (44) ainsi que l'arbre (20) sont supportés par le cadre montage (46).

10. Dispositif selon l'une des revendications précédentes, caractérisé en ce que la face radialement extérieure (48) du carter (24) comporte des rainures hélicoïdales (50) qui coopèrent avec l'organe de traction (26) réalisé sous forme d'un câble ou d'une courroie.

11. Dispositif selon l'une des revendications précédentes, caractérisé en ce que le cadre de montage (46) comporte le dispositif d'entraînement (16), le mécanisme de transmission (18) ainsi que la boîte de vitesses (22), et comporte une tige de guidage (52) pour le chariot (12), qui s'étend dans le sens des mouvements du chariot (12).

12. Dispositif selon l'une des revendications précédentes, caractérisé en ce que les extrémités axiales de la tige de guidage (52) portent des galets de renvoi pour l'organe de traction (26).

13. Dispositif selon l'une des revendications précédentes, caractérisé en ce que la tige de guidage (52) comporte des surfaces de roulement (56, 59) pour les galets de roulement (58, 60, 62) du chariot (12).

14. Dispositif selon l'une des revendications précédentes, caractérisé en ce que les surfaces de roulement (56, 59) présentent une forme de section transversale concave et sont aménagées aux côtés respectivement opposés de la tige de guidage (52).

15. Dispositif selon l'une des revendications précédentes, caractérisé en ce que la tige de guidage (52) est courbe et est adaptée aux contours extérieurs du pare-brise.

16. Dispositif selon l'une des revendications précédentes, caractérisé en ce que la tige de guidage (52) est constituée par un tronçon d'un profilé creux dont les extrémités sont fermées.

17. Dispositif selon l'une des revendications précédentes, caractérisé en ce que le chariot (12) comporte au moins deux et de préférence trois galets de roulement (58, 60, 62), parmi lesquels au moins un galet de roulement (60) évolue sur l'une des surfaces de roulement (59), alors que les autres galets de roulement (62) roulent sur l'autre surface de roulement (56).

18. Dispositif selon l'une des revendications précédentes, caractérisé en ce que les surfaces de roulement (66, 68) des galets de roulement (60, 62) sont configurées de façon convexe en section transversale, et de façon complémentaire des surfaces de roulement (56, 59).

19. Dispositif selon l'une des revendications précédentes, caractérisé en ce que le chariot (12) comporte un dispositif tendeur (70) relié à l'organe de traction (26).
